# FASCICULE DE BREVET EUROPEEN

(11) **EP 2 110 573 B1**
(45) Date de publication et mention de la délivrance du brevet: **05.10.2011**
(21) Numéro de dépôt: 08165933.6
(22) Date de dépôt: 06.10.2008
(51) Int. Cl.: F16D 1/096

(54) **Dispositif à démontage rapide de blocage complet sur un arbre d'une poulie**
Vorrichtung zur Schnelldemontage der kompletten Blockiervorrichtung auf der Welle einer Riemenscheibe
Quick-disconnect device for complete locking a pulley on a shaft

(30) Priorité: 06.08.2007 FR 0705775
(43) Date de publication de la demande: 21.10.2009
(73) Titulaire: Funari, Guerriero, 62710 Courrieres (FR)
(72) Inventeur: Funari, Guerriero, 62710 Courrieres (FR)
(74) Mandataire: Hennion, Jean-Claude

(56) Documents cités:
- EP-A- 0 318 977
- GB-A- 412 691
- US-A- 827 346
- US-A- 2 465 471
- US-A- 2 515 303
- US-A- 4 343 565
- US-A1- 2002 192 022

## Description

### Arrière-plan de l'invention

L'objet de la présente invention a trait au domaine des dispositifs de fixation permettant le montage et le démontage rapide d'une poulie sur un arbre moteur ou non moteur ; l'objet de la présente invention étant particulièrement adapté à un usage industriel ou agricole.

### Etat de la technique

De façon connue, les poulies sont généralement montées en force sur un arbre. Ce genre de mécanisme, qui présente bien souvent une forme conique, a pour intérêt d'être rapide au montage.

Néanmoins, ce genre de mécanisme nécessite l'utilisation d'un outillage lourd lors du démontage. Ce démontage se fait par l'utilisation de moyens tels qu'un pied de biche ou un arrache moyeu, ce qui entraîne l'altération des pièces de la poulie.

Par ailleurs, l'oxydation de certaines pièces ou parties de pièce peut nécessiter de nombreuses manipulations supplémentaires pour le démontage.

Tous ces inconvénients de ce genre de mécanisme sont autant de problèmes pour la productivité, et notamment pour le rendement d'une chaîne de production.

On connaît dans l'état de la technique, notamment dans les documents US 2515303 et US 2465471, des dispositifs permettant un montage complet sur un arbre d'une poulie.

Toutefois, aucun des documents de l'art ne propose une solution permettant un montage et un démontage rapide qui est simple d'utilisation, nécessite un minimum d'efforts malgré une éventuelle oxydation des pièces qui tendent à se bloquer, et permet d'éviter que les pièces de la poulie ne subissent le moindre choc, ceci sans pour autant augmenter de façon significative le coût de fabrication.

### Objet et résumé de l'invention

L'objet de l'invention tente donc de remédier aux inconvénients précités.

A cet effet, l'objet de la présente invention porte sur un dispositif pré-assemblé, adapté pour un démontage rapide, permettant le blocage complet sur un arbre avec clavettes d'une poulie ou de tout autre organe de transmission de mouvement.

Selon la présente invention, la poulie comporte une cavité conique axiale dans lequel vient s'engager un cône qui est alésé selon son axe au diamètre de l'arbre. Le cône comporte une gorge circulaire interne, deux rainures, l'une externe et l'autre interne, recevant chacune une clavette ; ces clavettes étant assujetties respectivement à la cavité conique de la poulie et à l'arbre. Les clavettes sont notamment disposées dans des rainures sur la cavité de la poulie et sur l'arbre.

Le cône est également découpé en deux parties symétriques selon un plan axial passant par les deux rainures et formant ainsi deux demi-cônes.

Ledit dispositif comporte, en outre, une vis creuse à collerette qui est de préférence en matériau inoxydable. Cette vis est apte à translater de façon longitudinale selon une liaison vis-écrou en prenant appui de manière directe ou indirecte sur le corps de la poulie.

De plus, les deux demi-cônes sont entraînés selon un mouvement de translation avant ou arrière dans la cavité conique au niveau de la gorge circulaire interne par la vis creuse à collerette, ladite collerette étant engagée dans la gorge circulaire interne, ce qui permet d'enserrer ou de libérer l'arbre et les clavettes.

Le démontage pour une poulie comportant un tel dispositif ne nécessite qu'un outillage très léger, tel qu'une clé mâle à six pans ou une clé plate, ce qui permet un montage et un démontage sans effort particulier tout en évitant l'altération des pièces. En outre, la constitution des deux parties du cône facilite son déblocage dans la cavité conique de la poulie.

De façon avantageuse, le fond du corps de la poulie présente un trou débouchant. Ainsi, la collerette de la vis est insérée dans la gorge commune au deux demi-cônes de sorte que, soit le vissage ou le dévissage direct de la vis dans le trou débouchant au fond du corps de la poulie permet la translation longitudinale avant ou arrière des deux demi-cônes, soit le dispositif comporte un écrou bloqué en translation dans les deux sens par rapport au corps de la poulie, et la collerette est bloquée en rotation par rapport à la gorge circulaire interne. Dans ce cas, la rotation de l'écrou entraîne la translation longitudinale avant ou arrière de la vis à collerette, et par conséquent la translation longitudinale des deux demi-cônes auxquelles elle est assujettie.

Selon une variante de réalisation correspondant à une pièce de transmission montée en bout d'arbre, le dispositif comporte un trou taraudé dans le corps de la poulie. La vis à collerette est directement insérée et vissée dans ce trou, de sorte que la rotation de cette vis à collerette permet en fonction du sens de rotation d'entraîner les deux demi-cônes vers le fond de la cavité conique ou de les repousser vers l'extérieur de la cavité conique.

Selon une autre variante de réalisation dans laquelle la pièce de transmission est traversée intégralement par un arbre, le dispositif comprend une vis creuse à collerette bloquée en rotation par rapport au cône, et un écrou externe bloqué en translation par rapport au corps de la poulie ; la rotation de cet écrou assurant la translation longitudinale des demi-cônes.

Selon un mode de réalisation, l'écrou est muni d'une collerette, permettant le blocage en translation de cet écrou. Par ailleurs, la rotation de cet écrou permet la translation longitudinale de la vis et des demi-cônes.

Selon un autre mode de réalisation, le dispositif comporte une couronne filetée qui est apte à être vissée dans le corps de la poulie, et qui est permet le blocage de l'écrou en translation. De la même façon, la rotation dudit écrou permet la translation longitudinale de la vis et des demi-cônes.

De façon avantageuse, le dispositif comporte une bague à cannelures internes qui est apte à s'adapter sur une partie cannelée externe de l'écrou, et qui comprend un contour hexagonal permettant un serrage de l'extérieur par des moyens de type clé plate.

Enfin, le dispositif peut comporter un circlips qui est inséré dans une gorge circulaire de l'écrou. De façon caractéristique, le profil de la gorge présente un pan oblique de sorte que ledit circlips assure avec la bague une liaison démontable par extraction en force.

### Brève description des dessins

D'autres caractéristiques et avantages de la présente invention ressortiront de la description ci-dessous, en référence aux dessins annexés qui en illustrent deux exemples de réalisation (version A et version B) qui sont bien évidemment dépourvus de tout caractère limitatif et sur lesquels :
- la figure 1 est un schéma de principe du dispositif selon la version A ;
- la figure 2 représente une coupe longitudinale du dispositif selon la version A ;
- la figure 3 représente une coupe transversale du dispositif selon la version A ;
- la figure 4 représente une coupe longitudinale du dispositif selon la version A selon un plan perpendiculaire horizontal au plan de la figure 2 ;
- la figure 5 représente un plan en perspective éclatée du dispositif selon la version A ;
- la figure 6 est un schéma de principe du dispositif selon la version B ;
- la figure 7 représente une coupe longitudinale du dispositif selon la version B ;
- la figure 8 représente une coupe transversale du dispositif selon la version B ;
- la figure 9 représente une coupe longitudinale du dispositif selon la version B selon un plan perpendiculaire horizontal au plan de la figure 7 ;
- la figure 10 représente le dispositif en coupe transverse montrant les cannelures ;
- la figure 11 représente un plan en perspective éclatée du dispositif selon la version B ;

### Description détaillée d'un mode de réalisation

Tout d'abord, par poulie dans la présente demande, il faut entendre tous organes de transmission tels qu'une roue d'engrenage, une commande de vanne ou encore de toutes autres pièces de transmission de mouvement montées en bout d'arbre ou traversées intégralement par un arbre.

Comme évoqué ci-dessus, la présente invention couvre deux modes de réalisation préférés. Dans une première version, le dispositif se rapporte à un dispositif spécialement adapté pour une pièce de transmission de mouvement montée en bout d'arbre (version A) ; dans une seconde version, celui-ci se rapporte à un dispositif spécialement adapté pour une pièce de transmission de mouvement intégralement traversée par un arbre.

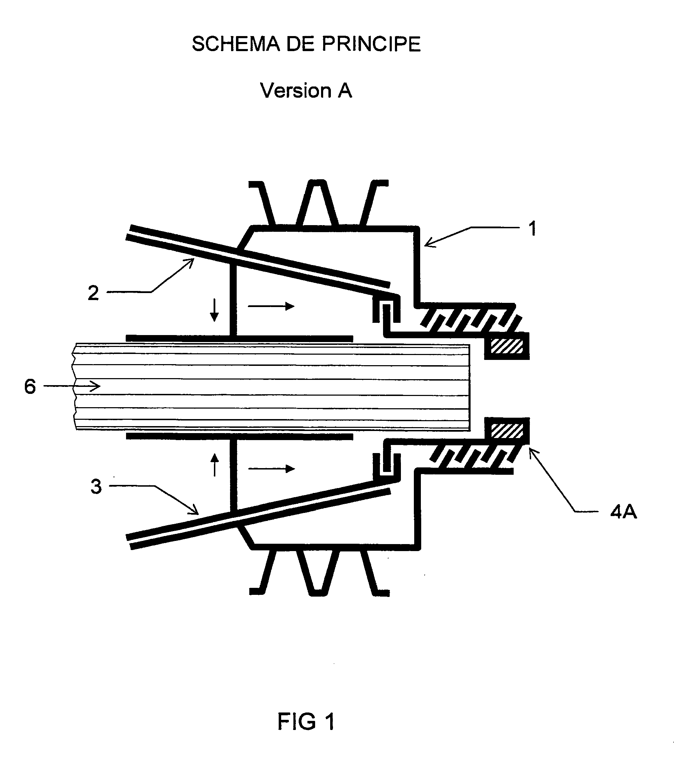

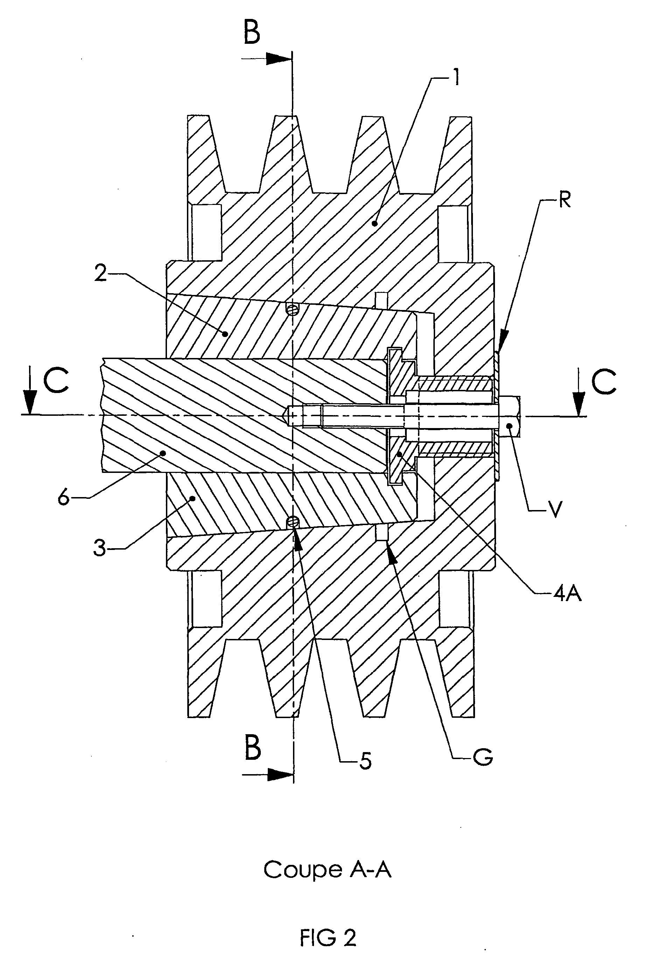

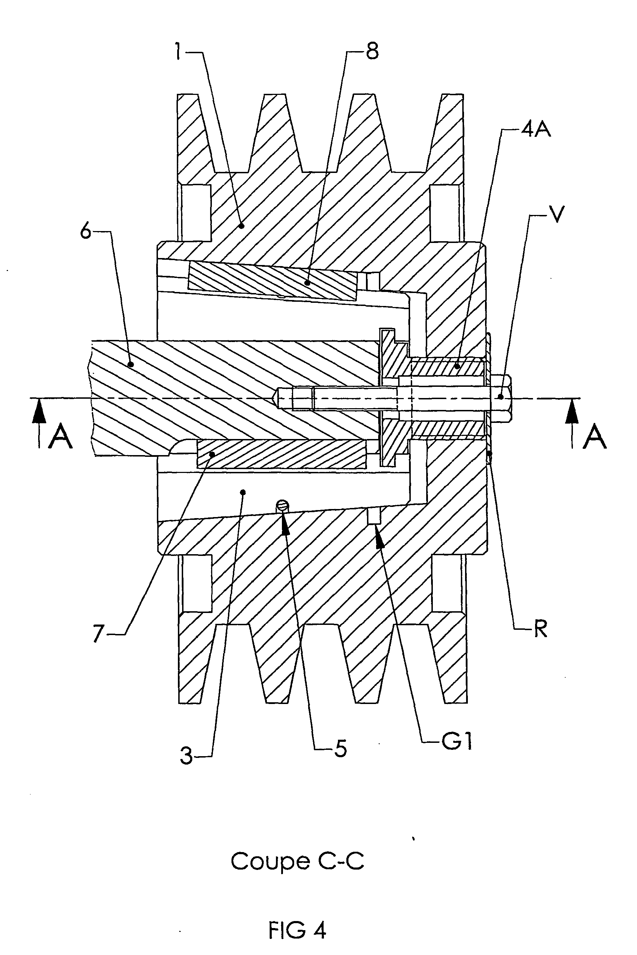

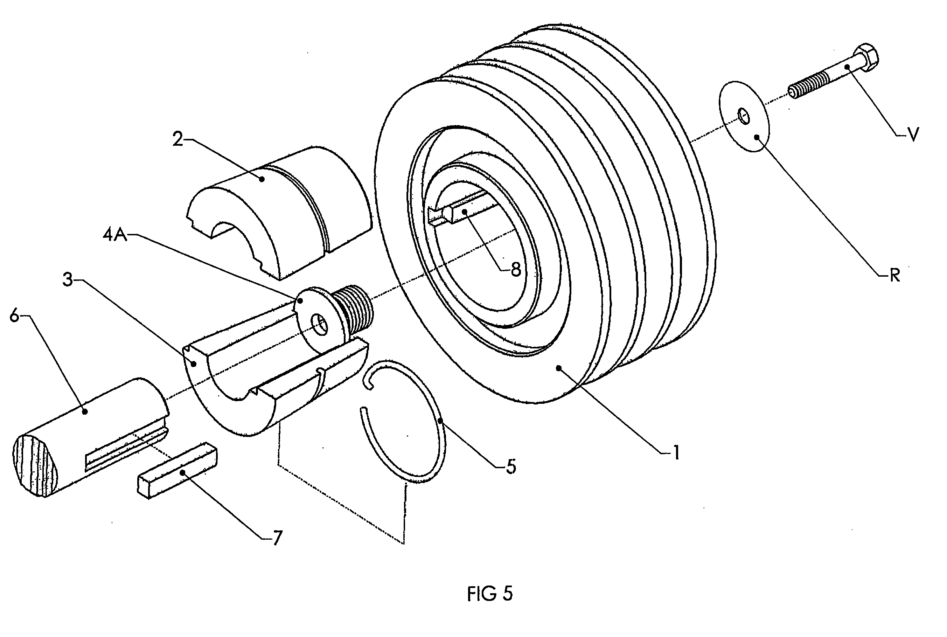

Le premier mode de réalisation de l'invention va maintenant être décrit en référence aux figures 1 à 5.

Dans cette première variante conforme à la version A de l'invention, la poulie 1 comprend un alésage conique au fond duquel se trouve un trou débouchant taraudé d'un pas à gauche. La vis creuse à collerette 4A est apte à venir se visser dans ce trou, entraînant par sa collerette un cône alésé selon son axe principal au diamètre de l'arbre 6, et coupant le cône en deux parties formant deux demi-cônes symétriques 2 et 3.

De façon avantageuse, la collerette de la vis 4A vient se loger dans une gorge située à l'intérieur de chaque demi-cône 2 et 3.

Permettre le blocage et le déblocage de la poulie 1 par le vissage et le dévissage de la vis 4A en provocant une translation longitudinale avant ou arrière des deux demi-cônes 2 et 3 est caractéristique de l'invention.

Lors du montage, l'opérateur muni d'une clé mâle à six pans n'a plus qu'à insérer la vis 4A et la serrer dans le sens horaire. Le cône par une translation longitudinale pénètre à l'intérieur de l'alésage ; les deux demi-cônes 2 et 3 se rapprochant de l'axe central et enserrant l'arbre 6 selon la force de serrage.

Une clavette 7, montée sur l'arbre 6, vient se loger dans une rainure interne commune aux deux demi-cônes 2 et 3, et assure ainsi le blocage en rotation de l'arbre 6 par rapport aux demi-cônes 2 et 3 ; tandis qu'une autre clavette 8, diamétralement opposée à la précédente, montée à l'intérieur de l'alésage conique de la poulie, vient se loger dans une rainure commune aux deux demi-cônes et assure ainsi le blocage en rotation des deux demi-cônes par rapport à la poulie 1.

Dans ce mode de réalisation, une vis de sûreté V et une rondelle R garantissent le blocage de la poulie en préservant le mécanisme de l'intrusion d'éventuels corps étrangers.

Pour le démontage, après le retrait de la vis V et de la rondelle R, l'opérateur n'a plus qu'à desserrer la vis 4A dans le sens trigonométrique afin que celle-ci exerce une force sur les demi-cônes 2 et 3 de sorte à les repousser vers l'extérieure de la poulie 1, provocant ainsi la libération de l'arbre 6 et des clavettes 7 et 8.

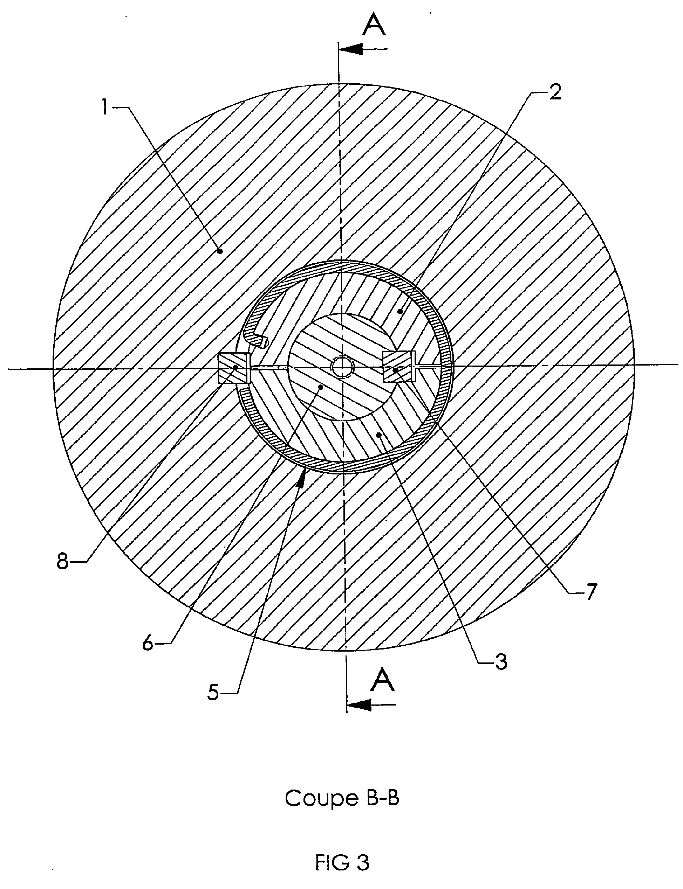

Dans une variante particulièrement avantageuse, en référence notamment à la figure 3, un circlips 5, inséré dans une gorge externe commune aux deux demi-cônes 2 et 3, et immobilisé en rotation grâce à son extrémité recourbée et insérée dans un trou borgne sur l'un des deux demi-cônes 2 et 3, assure le maintien de ces demi-cônes 2 et 3 lors de leur insertion dans l'alésage conique.

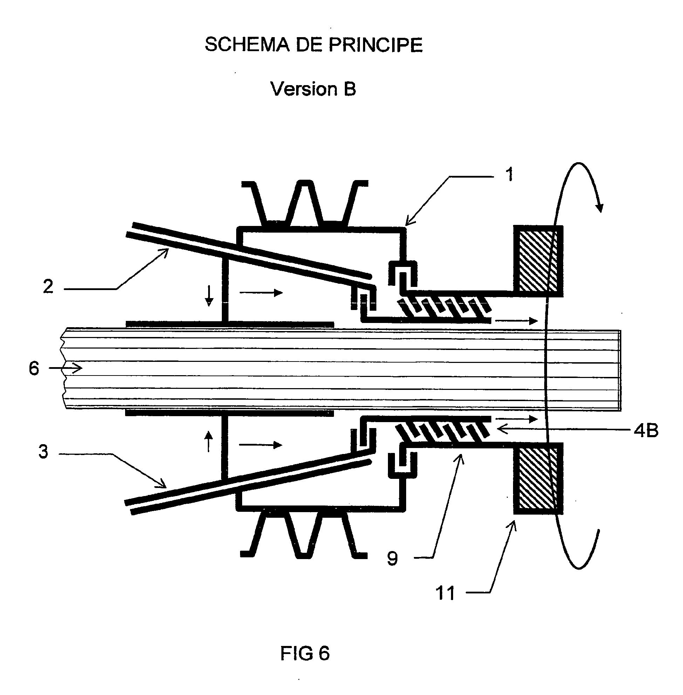

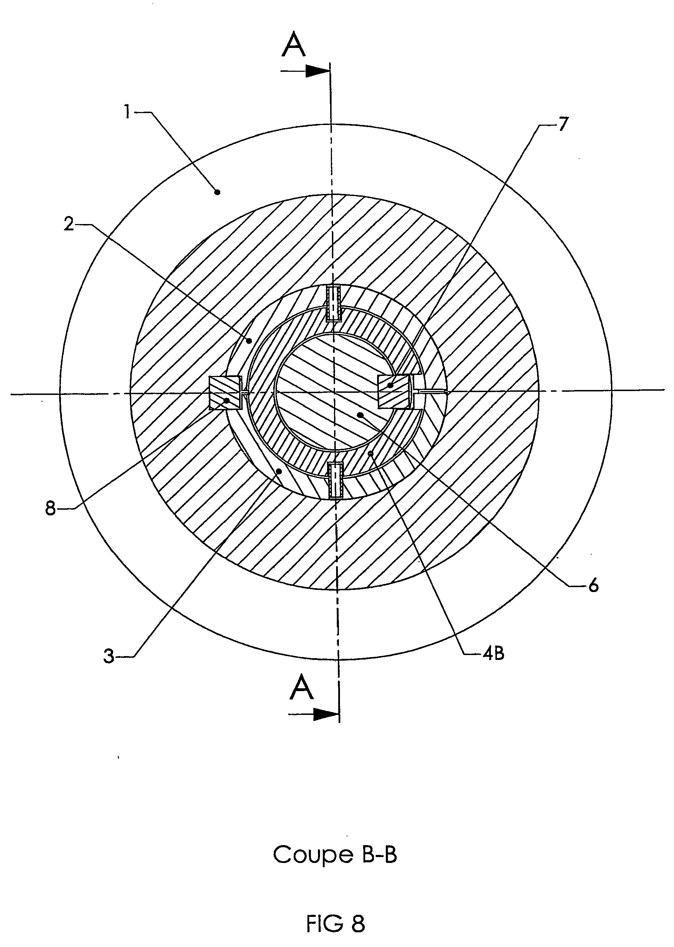

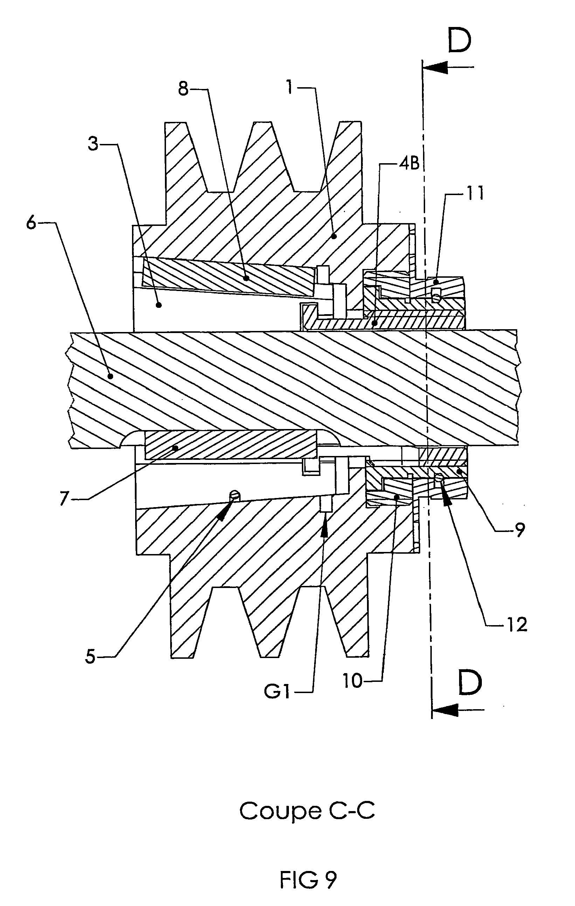

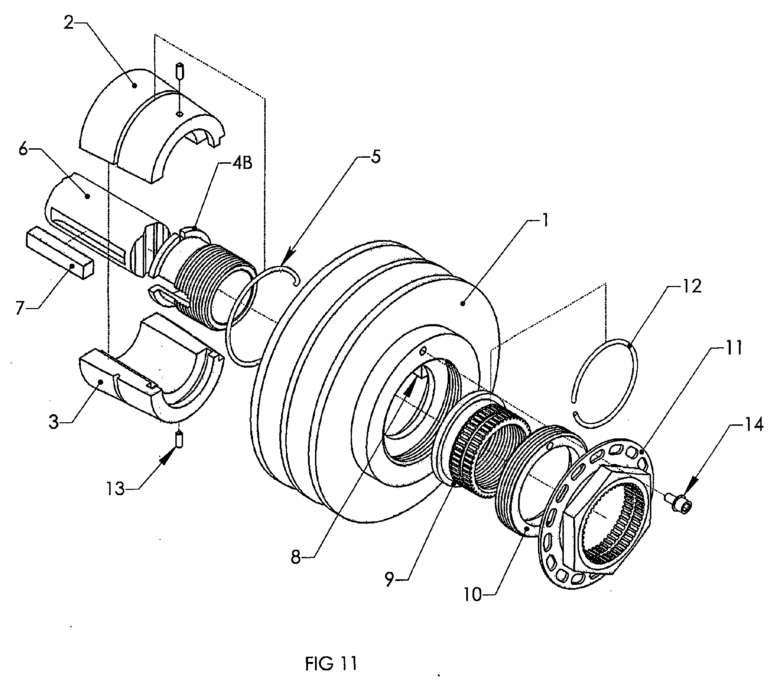

Le deuxième mode de réalisation de l'invention va maintenant être décrit en référence aux figures 6 à 11.

Dans cette deuxième variante conforme à la version B de l'invention, de façon identique, on retrouve une poulie 1 comprenant un alésage conique dans lequel vient s'insérer deux demi-cônes 2 et 3 adaptés au diamètre de l'arbre 6 et maintenus de préférence assemblés par un circlips 5 inséré dans une gorge, de manière identique à la première variante de réalisation.

Dans ce mode de réalisation, les deux demi-cônes qui enserrent l'arbre 6 sont entraînés vers l'intérieur de l'alésage conique par une vis 4B bloquée en rotation par rapport aux deux demi-cônes 2 et 3 grâce aux goupilles 13 et la clavette 7.

Permettre le blocage et le déblocage de la poulie 1 par le vissage et le dévissage de la vis 4B en provocant une translation longitudinale avant ou arrière des deux demi-cônes 2 et 3 est caractéristique de l'invention.

Pour ce faire, le dispositif comporte un écrou à collerette 9 qui est bloqué en translation et dont la rotation provoque la translation de la vis 4B, et donc la translation des demi-cônes 2 et 3.

Selon le sens de rotation de l'écrou 9, l'opérateur pourra enserrer ou libérer l'arbre 6.

Dans une variante de réalisation avantageuse, le dispositif comporte une couronne 10 filetée qui assure le blocage en translation de l'écrou 9. Cette couronne 10 est vissée dans la poulie 1 par un filetage à pas à gauche pour éviter que le desserrage de l'écrou n'entraîne celui de la couronne 10.

L'écrou 9 peut également être pourvu de cannelures externes pour le rendre solidaire de la bague extérieure 11, qui est, elle cannelée sur l'intérieur. Le contour hexagonal de cette bague 11 permet le serrage de la vis à l'aide d'une clé plate.

Dans une autre variante, on dispose d'un circlips 12 inséré dans une gorge G2 située à mi-longueur des cannelures. Le circlips 12 est ainsi adapté pour fixer en translation la bague 11 sur l'écrou 9.

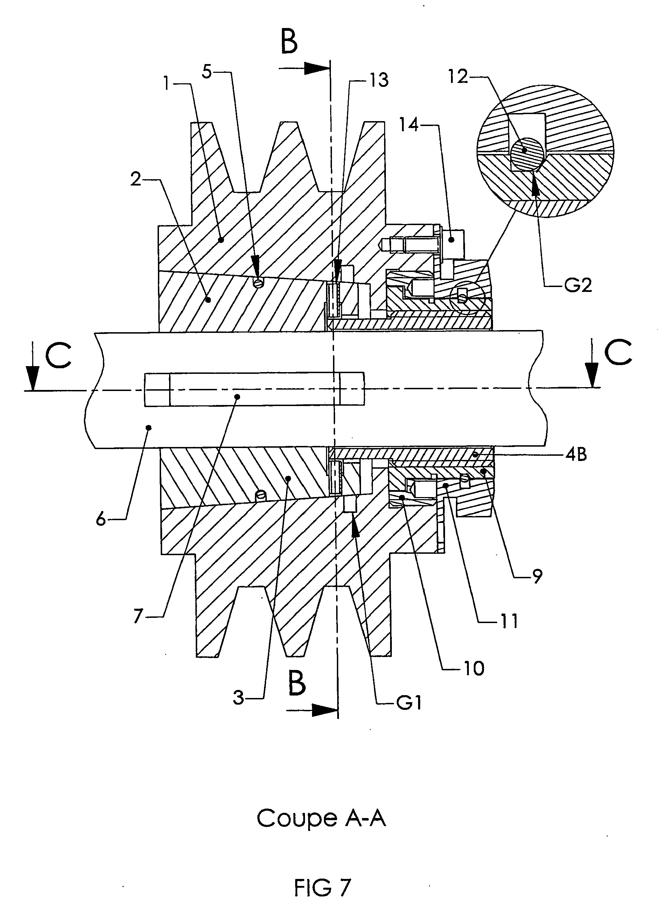

Toutefois, il est possible, si nécessaire, de l'en extraire en force grâce à un pan incliné du profil de la gorge G2 pratiquée sur l'écrou 9, comme présenté sur la figure 7.

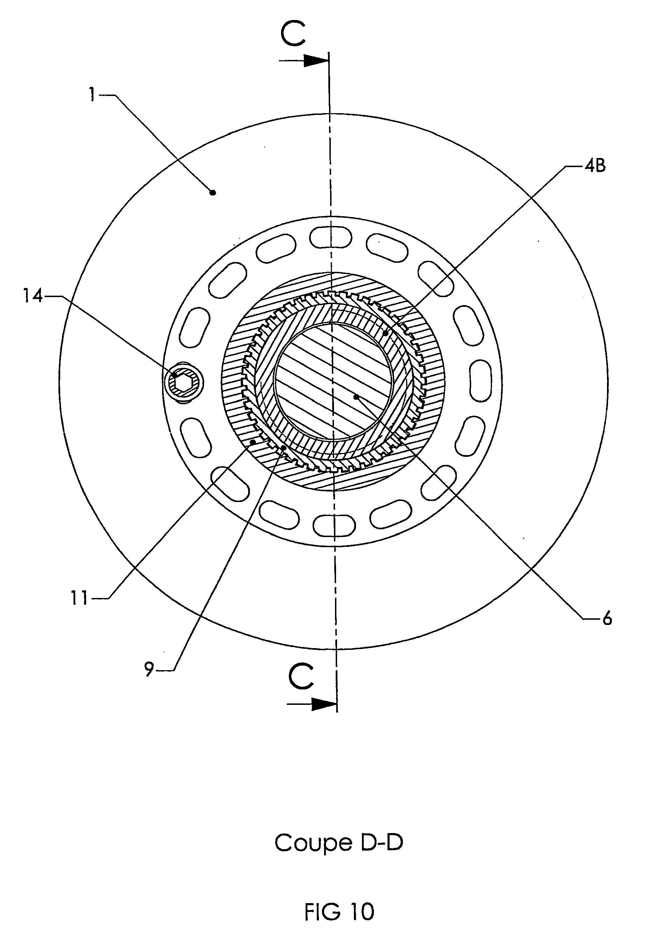

En outre, la bague 11 peut être pourvue, en plus de sa partie hexagonale, d'un disque percé sur sa périphérie d'une série de trous oblongs permettant l'insertion d'une petite vis 14 hexagonale creuse dans un trou taraudé de la poulie pour éviter tout risque de desserrage, tel qu'illustré en figure 10.

Les différentes pièces sont assemblées à l'avance, et il suffit à l'opérateur muni d'une clé plate d'enfiler l'ensemble sur l'arbre, et effectuer le serrage sur la bague 11 en tournant dans le sens horaire. Ensuite, l'opérateur doit insérer la vis 14 dans le trou oblong correspondant à la position angulaire de la bague 11.

Pour le démontage, il lui suffit de retirer la vis 14, puis de tourner dans le sens trigonométrique afin de serrer l'écrou 9 pour repousser les deux demi-cônes 2 et 3, et libérer l'arbre 6.

L'objectif de la présente invention est de permettre un montage et un démontage simple sur un arbre d'une poulie. Il devra être observé que cette description détaillée porte sur deux modes de réalisation particuliers du dispositif, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

## Revendications

1. Dispositif pré-assemblé, adapté pour un démontage rapide, permettant le blocage complet sur un arbre (6) d'une poulie (1) ou de tout autre organe de transmission de mouvement, ladite poulie (1) présentant une cavité conique axiale dans lequel vient s'engager un cône, alésé selon son axe au diamètre de l'arbre (6), ledit cône comprenant deux rainures, l'une externe et l'autre interne, recevant chacune une clavette, les clavettes (7,8) étant assujetties respectivement à la cavité conique et à l'arbre (6) ; ledit dispositif étant **caractérisé en ce que** le cône comprend une gorge circulaire interne, et est découpé en deux parties symétriques selon un plan axial passant par lesdites deux rainures de sorte à former deux demi-cônes (2,3), **en ce qu'**il comporte une vis creuse à collerette (4A,4B) dont la collerette est insérée dans la gorge commune aux deux demi-cônes (2,3), et **en ce que** lesdits deux demi-cônes (2,3) sont entraînés selon un mouvement de translation longitudinale avant ou arrière dans la cavité conique grâce à ladite vis creuse à collerette (4A,4B) montée en liaison par rapport à la poulie, permettant d'enserrer ou de libérer l'arbre (6) et les clavettes (7,8).

2. Dispositif selon la revendication 1, **caractérisé en ce que** le fond du corps de la poulie (1) présente un trou taraudé débouchant de sorte que le vissage direct de la vis (4A) dans le trou débouchant permet la translation longitudinale avant ou arrière des deux demi-cônes (2,3) en entraînant les deux demi-cônes (2,3) vers le fond de la cavité conique ou en les repoussant vers l'extérieur de la cavité conique.

3. Dispositif selon la revendication 1, **caractérisé en ce qu'**il comporte une vis creuse à collerette (4B) traversant intégralement l'arbre (6), ladite vis (4B) étant bloquée en rotation par rapport aux deux demi-cônes (2,3), et **en ce qu'**il comporte un écrou (9) bloqué en translation dans les deux sens par rapport au corps de la poulie de sorte que la rotation dudit écrou (9) permet la translation longitudinale avant ou arrière des deux demi-cônes (2,3).

4. Dispositif selon la revendication 3, **caractérisé en ce que** l'écrou (9) est muni d'une collerette, permettant son blocage en translation, la rotation dudit écrou (9) permettant la translation longitudinale de la vis (4B) et des demi-cônes (2,3).

5. Dispositif selon la revendication 3 ou 4, **caractérisé en ce qu'**il comporte une couronne filetée (10) apte à être vissée dans le corps de la poulie (1), et qui est permet le blocage de l'écrou (9) en translation, la rotation dudit écrou (9) permettant la translation longitudinale de la vis (4B) et des demi-cônes (2,3).

6. Dispositif selon l'une quelconque des revendications 4 à 5, **caractérisé en ce qu'**il comporte une bague (11) à cannelures internes qui est apte à s'adapter sur une partie cannelée externe de l'écrou (9), et qui comprend un contour hexagonal permettant un serrage de l'extérieur par des moyens de type clé plate.

7. Dispositif selon la revendication 6, **caractérisé en ce qu'**il comprend un circlips (12) inséré dans une gorge circulaire (G2) de l'écrou (9), le profil de la gorge (G2) présentant un pan oblique de sorte que ledit circlips assure avec la bague (11) une liaison démontable par extraction en force.

8. Dispositif selon l'une quelconque des revendications précédentes, **caractérisé en ce qu'**une gorge externe commune est agencée sur les deux demi-cônes (2,3), cette gorge recevant le circlips (5) pour leur maintien en position autour de l'arbre (6).

## Claims

1. A preassembled device, adapted for rapid disassembly, allowing complete locking on a shaft (6) of a pulley (1) or any other movement transmitting member, said pulley (1) having an axial conical cavity in which a cone is engaged, bored along its axis to the diameter of the shaft (6), said cone comprising two grooves, one outer and the other inner, each receiving a wedge, the wedges (7, 8) being subjugated respectively to the conical cavity and the shaft (6); said device being **characterized in that** the cone comprises an inner circular groove, and is cut into two symmetrical parts along an axial plane passing through said two grooves so as to form two half-cones (2, 3), **in that** it includes a flanged socketed screw (4A, 4B) whereof the flange is inserted into the groove shared by the two half-cones (2, 3), and **in that** said two half-cones (2, 3) are longitudinally translated forward or backward in the conical cavity owing to said flanged socketed screw (4A, 4B) connectedly mounted relative to the pulley, making it possible to grip or release the shaft (6) and the wedges (7, 8).

2. The device according to claim 1, **characterized in that** the bottom of the body of the pulley (1) has a tapped hole emerging so that the direct screwing of the screw (4A) in the through hole allows the forward and backward longitudinal translation of the two half-cones (2, 3) while driving the two half-cones (2, 3) toward the bottom of the conical cavity or pushing them back towards the outside of the conical cavity.

3. The device according to claim 1, **characterized in that** it includes a flanged socketed screw (4B) passing through the entire shaft (6), said screw (4B) being rotationally locked relative to the two half-cones (2, 3), and **in that** it includes a nut (9) translationally locked in both directions relative to the body of the pulley so that the rotation of said nut (9) allows the forward or backward longitudinal translation of the two half-cones (2, 3).

4. The device according to claim 3, **characterized in that** the nut (9) is provided with a flange, allowing translational locking thereof, the rotation of said nut (9) allowing the longitudinal translation of the screw (4B) and of the half-cones (2, 3).

5. The device according to claim 3 or 4, **characterized in that** it includes a threaded crown (10) that can be screwed into the body of the pulley (1), and that allows the translational locking of the nut (9), the rotation of said nut (9) allowing the longitudinal translation of the screw (4B) and of the half-cones (2, 3).

6. The device according to any one of claims 4 to 5, **characterized in that** it includes a ring (11) with inner splines that can adapt on a splined outer part of the nut (9), and which comprises a hexagonal contour allowing tightening from the outside using a means of the flat-key type.

7. The device according to claim 6, **characterized in that** it comprises a spring retaining ring (12) inserted into a circular groove (G2) of the nut (9), the profile of the groove (G2) having an oblique face so that said spring retaining ring forms, with the ring (11), a connection that can be disassembled by forcible extraction.

8. The device according to any one of the preceding claims, **characterized in that** a shared outer groove is arranged on the two half-cones (2, 3), said groove receiving the spring retaining ring (5) for maintenance thereof in position around the shaft (6).

## Patentansprüche

1. Vormontierte Vorrichtung für eine schnelle Demontage, die die vollständige Festlegung einer Scheibe (1) oder jedes anderen Organs zur Bewegungsübertragung an einer Welle (6) ermöglicht, wobei die Scheibe (1) einen axialen konischen Hohlraum aufweist, in den ein Kegel eingreift, der entlang ihrer Achse mit dem Durchmesser der Welle (6) ausgebohrt ist, wobei der Kegel zwei Nuten, eine äußere und eine innere, aufweist, die jeweils einen Keil aufnehmen, wobei die Keile (7, 8) an dem konischen Hohlraum bzw. an der Welle (6) gut befestigt sind, wobei die Vorrichtung **dadurch gekennzeichnet ist, daß** der Kegel eine umlaufende innere Rille aufweist und entlang einer Axialebene, die durch die beiden Nuten verläuft, in zwei symmetrische Teile geschnitten ist, so daß zwei Halbkegel (2, 3) gebildet werden, daß sie eine hohle Bundschraube (4A, 4B) umfaßt, deren Bund in die den beiden Halbkegeln (2, 3) gemeinsame Rille eingesetzt ist, und daß die beiden Halbkegel (2, 3) durch die in Verbindung gegenüber der Scheibe angebrachte hohle Bundschraube (4A, 4B) in einer vorderen oder hinteren Längsverschiebebewegung in den konischen Hohlraum mitgenommen werden, was ermöglicht, die Welle (6) und die Keile (7, 8) einzuspannen oder freizugeben.

2. Vorrichtung nach Anspruch 1, **dadurch gekennzeichnet, daß** der Boden des Körpers der Scheibe (1) eine durchgehende Gewindebohrung aufweist, so daß das direkte Einschrauben der Schraube (4A) in die durchgehende Bohrung die vordere oder hintere Längsverschiebung der beiden Halbkegel (2, 3) dadurch ermöglicht, daß die beiden Halbkegel (2, 3) zum Grund des konischen Hohlraums mitgenommen werden oder daß sie aus dem konischen Hohlraum heraus gedrückt werden.

3. Vorrichtung nach Anspruch 1, **dadurch gekennzeichnet, daß** sie eine hohle Bundschraube (4B) umfaßt, die die Welle (6) vollständig durchgreift, wobei die Schraube (4B) gegenüber den beiden Halbkegeln (2, 3) drehfest ist, und daß sie eine Mutter (9) umfaßt, die in beiden Richtungen gegenüber dem Körper der Scheibe gegen ein Verschieben festgelegt ist, so daß das Drehen der Mutter (9) die vordere oder hintere Längsverschiebung der beiden Halbkegel (2, 3) ermöglicht.

4. Vorrichtung nach Anspruch 3, **dadurch gekennzeichnet, daß** die Mutter (9) mit einem Bund versehen ist, der deren Festlegen gegen ein Verschieben ermöglicht, wobei das Drehen der Mutter (9) die Längsverschiebung der Schraube (4B) und der Halbkegel (2, 3) ermöglicht.

5. Vorrichtung nach Anspruch 3 oder 4, **dadurch gekennzeichnet, daß** sie einen mit Gewinde versehenen Kranz (10) aufweist, der geeignet ist, in den Körper der Scheibe (1) geschraubt zu werden, und der ermöglicht, die Mutter (9) gegen ein Verschieben festzulegen, wobei das Drehen der Mutter (9) die Längsverschiebung der Schraube (4B) und der Halbkegel (2, 3) ermöglicht.

6. Vorrichtung nach einem der Ansprüche 4 bis 5, **dadurch gekennzeichnet, daß** sie einen Ring (11) mit Innenrillen umfaßt, der geeignet ist, auf einen gerillten Außenteil der Mutter (9) aufgesetzt zu werden, und der eine sechseckige Kontur aufweist, die ein Spannen von der Außenseite durch Mittel vom Typ Maulschlüssel ermöglicht.

7. Vorrichtung nach Anspruch 6, **dadurch gekennzeichnet, daß** sie einen Sicherungsring (12) umfaßt, der in eine umlaufende Rille (G2) der Mutter (9) eingesetzt ist, wobei das Profil der Rille (G2) eine schräge Kante aufweist, so daß der Sicherungsring mit dem Ring (11) eine durch kräftiges Herausziehen lösbare Verbindung gewährleistet.

8. Vorrichtung nach einem der vorhergehenden Ansprüche, **dadurch gekennzeichnet, daß** eine gemeinsame Außenrille an den beiden Halbkegeln (2, 3) ausgebildet ist, wobei diese Rille den Sicherungsring (5) aufnimmt, um sie um die Welle (6) herum in Position zu halten.
